# EUROPEAN PATENT APPLICATION

(11) **EP 4 528 320 A1**
(43) Date of publication of application: **26.03.2025**
(21) Application number: 24197967.3
(22) Date of filing: 02.09.2024
(51) Int. Cl.: G01S 7/486, G01S 7/497, G01S 17/95, G02B 26/02, G02F 1/00, G02F 1/01

(54) **SELECTIVE ATTENUATION OF LIGHT PROVIDED TO DETECTOR IN LIDAR SENSOR BASED ON SIGNAL INTENSITY**

(30) Priority: 25.09.2023 US 202318473541
(71) Applicant: Honeywell International Inc., Charlotte, NC 28202 (US)
(72) Inventor: DOBBINS, Thomas, Charlotte, 28202 (US); HORAK, Erik, Charlotte, 28202 (US); TAYLOR, Lucas N., Charlotte, 28202 (US)
(74) Representative: Haseltine Lake Kempner LLP

(57) **Abstract**

A light detection and ranging (LiDAR) sensor includes detector(s), attenuator(s), and processor(s). The detector(s) receive backscattered light backscattered from at least one measurement location; and determine a current intensity of the backscattered light. The attenuator(s) is positioned between the at least one measurement location and the at least one detector. The processor(s) is configured to: select at least one of (1) a particular attenuator or (2) an attenuation level to use based on the current intensity of the backscattered light. The particular attenuator is configured to: selectively attenuate the backscattered light based on at least one of: (1) characteristics of the particular attenuator or (2) the attenuation level to use as selected by the at least one processor for the current intensity of the backscattered light.

## Description

### BACKGROUND

Light Detection And Ranging (LiDAR) sensors use light to determine distances to objects and/or atmospheric properties, such as temperature, density, winds, humidity, aerosol measurements, and/or turbulence.

### SUMMARY

A light detection and ranging (LiDAR) sensor, the LiDAR sensor including: at least one detector configured to: receive backscattered light backscattered from at least one measurement location; and determine a current intensity of the backscattered light; at least one attenuator positioned between the at least one measurement location and the at least one detector; at least one processor configured to: select at least one of (1) a particular attenuator or (2) an attenuation level to use based on the current intensity of the backscattered light; and wherein the particular attenuator is configured to: selectively attenuate the backscattered light based on at least one of: (1) characteristics of the particular attenuator or (2) the attenuation level to use as selected by the at least one processor for the current intensity of the backscattered light.

A method of operating a light detection and ranging (LiDAR) sensor, the method comprising: receiving, at a detector, backscattered light backscattered from at least one measurement location; determining, at the detector, a current intensity of the backscattered light; selecting, using at least one processor, at least one of (1) a particular attenuator or (2) an attenuation level to use based on the current intensity of the backscattered light; and selectively attenuating the backscattered light based on at least one of: (1) characteristics of the particular attenuator or (2) the attenuation level to use as selected for the current intensity of the backscattered light.

A system comprising: a light detection and ranging (LiDAR) sensor configured to receive backscattered light having a current intensity from at least one atmospheric region; at least one attenuator configured to attenuate the current intensity of the backscattered light; and circuitry configured to: determine the current intensity of the backscattered light; and cause the at least one attenuator to attenuate the backscattered light based on the current intensity.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
Figures 1A-1C are block diagrams illustrating example systems having LiDAR sensors.
Figure 2 is an example method for operating a LiDAR sensor.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In examples, Light Detection And Ranging (LiDAR) sensors can be used to determine distances to objects using light. In examples, LiDAR sensors and systems are able to generate representations of a surrounding environment. In examples, LIDAR systems are able to produce large quantities of data and enable detailed representations of environments based on measurements of distances to objects (including the distance from the ground or from objects affixed to the ground). In examples, LiDAR that uses measurement of distances to objects are sometimes referred to as hard target LiDAR.

In examples, atmospheric LiDAR sensors are used to determine atmospheric properties, such as temperature, density, winds, humidity, aerosol measurements, and/or turbulence. In examples, LiDAR sensors can be used to the properties of the atmosphere by looking at the backscattered light off particles and molecules in the air. In examples, LiDAR sensors and systems are able to generate representations of a surrounding environment from the ground surface to the Thermosphere. In examples, LIDAR systems are able to produce large quantities of weather data and enable detailed representations of environments based on measurements of the backscattered light. In examples, LiDAR that determines atmospheric properties are sometimes referred to as atmospheric LiDAR and/or hard target LiDAR.

In examples, atmospheric LiDAR sensors may detect ten orders of magnitude differences in intensity of backscattered light between measurements at low and high altitude. In examples, the differences in intensity of backscattered light at low and high altitude are based on the density of particles in the air at low and high altitude. In examples, LiDAR sensors may detect large differences between the strongest and weakest signal intensities, where the strong signals may be one hundred thousand or more times as intense as the weakest signals. In examples, a single detector cannot handle both the high and low signal level in the atmospheric LiDAR sensors (or other LiDAR sensors with large differences between the strongest and weakest signals). In examples, detectors can't handle that range of signals and will either saturate for higher signals or it will be too noisy to measure the lower signals. In examples, it is still necessary to measure both ends of the spectrum of strongest and weakest signal intensities. In examples, multiple detectors are used together to detect different signal levels (such as high and low signals), which adds significant complexity and cost to LiDAR sensor systems. In examples using multiple detectors, the quantity of detectors may be selected to balance performance against complexity and cost. In examples, LiDAR sensor systems with too few detectors may not be able to handle the dynamic range necessary to detect vastly different signal levels. In examples, adding a new sensor or detector increases at least one of the Size, Weight, Power, and Cost (SWaP-C) to unacceptable levels.

In examples described in more detail herein, attenuators are used to quickly scale the intensity (the throughput of light) up and down before it reaches the detector, such that a single detector (or at least fewer detectors) can be used to detect the intensity of the backscattered light across the range of intensities. In examples, at least one attenuator (such as a variable attenuator or a plurality of fixed attenuators) is used to reduce the intensity of the backscattered light at low altitudes and let more of the backscattered light in at higher altitudes, minimizing or obviating the need for multiple detectors by reducing the dynamic range required to be measured by the LiDAR sensor system to measure at both low and high altitudes. In examples, the at least one attenuator (such as a variable attenuator or a plurality of fixed attenuators) is used to modulate the incoming signal in a rapid and controlled way. In examples, the at least one attenuator may include a chopper, a photoelastic modulator and polarizer, a fiber attenuator, and/or a free space attenuator. In examples, the at least one attenuator can be positioned in a number of places before the light reaches the detector(s). In examples, the at least one attenuator can be integrated into a LiDAR system to improve system performance and reduce cost. While use of the at least one attenuator with atmospheric LiDAR is useful based on the high dynamic range required to be measured by the LiDAR sensor system at both low and high altitudes, in examples, the use of the at least one attenuator can also be used with other LiDAR systems that are measuring other distances or ranges other than altitude.

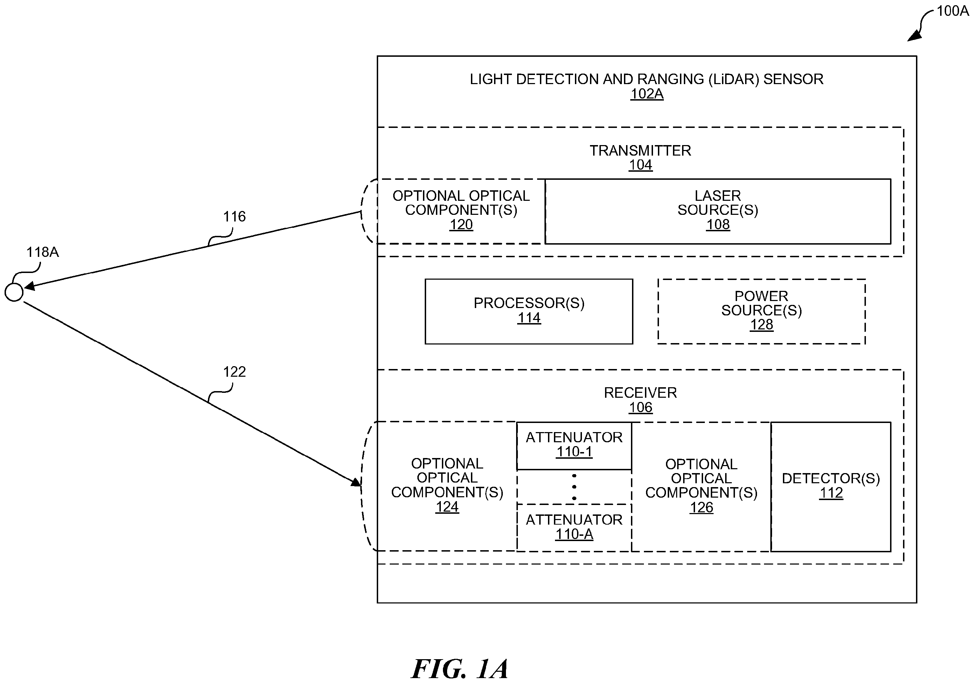

Figures 1A-1C are block diagrams illustrating example systems 100A-100C. In examples, the systems 100A-100C can be implemented onboard or coupled to a vehicle, held by a person, etc. Use of the term "vehicle" is not intended to be limiting and includes all classes of vehicles falling within the ordinary meaning of the term. This would include but not limited to, aerial traversing vehicles (e.g., commercial, non-commercial, or recreational aircraft), unmanned and/or space traversing vehicles (e.g., satellites, urban air mobility vehicles), water traversing vehicles (e.g., ships, submarines), and land traversing vehicles (e.g., automobiles including cars, trucks, motorcycles). Throughout the disclosure, the vehicle may be described as an aircraft with the understanding that the principles described herein apply to other vehicles where applicable.

Figure 1A is a block diagram of a system 100A having a Light Detection And Ranging (LiDAR) sensor 102A having components (optionally referred to as a transmitter 104 and a receiver 106) including at least one least one laser source 108, at least one attenuator 110 (including attenuator 110-1 and any quantity of optional attenuators 110 through optional attenuator 110-A), at least one detector 112, and at least one processor 114. In examples, the at least one laser source 108 is configured to emit laser light 116 (or other light) toward a measurement location 118A (such as an atmospheric region, a particle, an object, the ground, a surface, etc.). In examples, the at least one laser source 108 can be any kind of light source generator, including any kind of laser. In examples, the at least one laser source 108 is communicatively coupled to at least one optional optical component 120, which focuses, expands, or otherwise conditions the laser light 116 (or other light) emitted from the laser source 108.

In examples, at least a portion of the laser light 116 is backscattered off of the measurement location 118A as backscattered light 122. In examples, the measurement location includes at least one atmospheric region, wherein the backscattered light is backscattered from the at least one atmospheric region and used to measure atmospheric properties (such as temperature, density, winds, humidity, aerosol measurements, and turbulence). In examples, the measurement location 118A includes at least one atmospheric region and/or at least one particle, wherein the light is backscattered from the at least one atmospheric region and/or at least one particle. In examples, the measurement location 118A includes at least one object and/or at least one surface (such as the ground), wherein the backscattered light is reflected from the at least one object and/or at least one surface and can be used to measure a distance to the at least one object and/or at least one surface.

In examples, the backscattered light 122 is received via at least one optional optical component 124, through the at least one attenuator 110, via at least one optional optical component 126, and at the at least one detector 112. In examples, the at least one optional optical component 124 includes a telescope which magnifies the backscattered light 122. In examples, the at least one optional optical component 124 includes other optical component(s) which focus, expand, or otherwise condition the backscattered light 122. In examples, the at least one optional optical component 126 includes optical fibers, an interferometer, an optical instrument, a scientific instrument, or other optical component. In examples, the at least one attenuator 110 is positioned between optional optical component(s) 124 and optional optical component(s) 126. In examples, the at least one attenuator 110 is positioned within the optional optical component(s) 126.

In examples, the at least one attenuator 110 attenuates the backscattered light 122 based on the intensity of the backscattered light 122. In examples, the level of attenuation of the backscattered light 122 for different intensities of the backscattered light 122 is used to normalize the intensity of the backscattered light into a range supported by the detector 112 (to avoid saturation by higher intensities of backscattered light or too much noise with lower intensities of backscattered light). In examples, the at least one attenuator 110 is used to attenuate the backscattered light 122 more when the intensity of the backscattered light 122 is higher. In examples, the at least one attenuator 110 is used to attenuate the backscattered light 122 less (or not at all) when the intensity of the backscattered light 122 is lower. In examples, it is desirable to have more (or all) of the backscattered light 122 pass to the detector 112 when you have a lower intensity and less of the backscattered light 122 to pass to the detector 112 when you have a higher intensity. In examples, multiple attenuators 110 can be used to attenuate the backscattered light 122 at different levels/steps to help normalize a larger range to the range supported by the detector 112.

In examples, the at least one detector 112 determines a current intensity of the backscattered light 122 and provides information regarding the current intensity to the at least one processor 114. In examples, the at least one detector 112 converts optical signals (from the backscattered light 122) to a corresponding electrical signal. In examples, the at least one processor 114 selects which of the at least one attenuator 110 (if any) to use to attenuate the backscattered light 122 based on the current intensity. In examples, the at least one processor 114 adjusts the attenuation of at least one attenuator 110 based on the current intensity. In examples, the at least one processor 114 determines, based on the current intensity, that no attenuation is necessary and bypasses the at least one attenuator 110 entirely. In examples, the attenuation of the at least one attenuator 110 is selected to attenuate by a particular amount for a particular signal intensity range that corresponds to a particular range of distances to the measurement location 118A (such an atmospheric region, a particle, an object, the ground, or another surface). In examples, at least one of the Size, Weight, Power, and Cost (SWaP-C) can be reduced by using fewer detectors, even with the addition of the at least one attenuator 110 if the at least one attenuator is being added is smaller, lighter, lower power, and less expensive than the detector(s) it is replacing. In addition, using at least one attenuator 110 instead of additional detector(s) may even improve performance of the LiDAR sensor 102A. In examples, the at least one processor 114 controls a timer/clock that controls other components of the LiDAR sensor 102A.

In examples, the at least one processor 114 receives an input relating to the current intensity of the backscattered light 122 from the at least one detector 112, where the current intensity of the backscattered light (and the input relating to it) is representative of and dependent on the distance to the measurement location 118A. In examples, while the current intensity of the backscattered light 122 is largely dependent on the altitude, there could be a cloud at some altitude that knocks down the signal more than it otherwise might. In examples, the at least one processor 114 makes a determination based on the input relating to the current intensity of the backscattered light 122 (which may be representative of and/or dependent on the distance or other relationship to the measurement location 118A) of how it is going to use attenuation/attenuator to attenuate the current intensity of the backscattered light 122.

In examples, based on the current intensity of the backscattered light 122, attenuation of the backscattered light 122 occurs by a certain amount based on thresholds or ranges. In examples, when the current intensity of the backscattered light 122 is within a first range, a first amount of attenuation is applied; and when the current intensity of the backscattered light 122 is within a second range, either no attenuation is applied or a second amount of attenuation is applied; etc. In examples, if the current intensity of the backscattered light 122 is low, no attenuation (or lower amounts of attenuation) is applied. In examples, as the current intensity of the backscattered light 122 get higher, more attenuation is applied to the backscattered light 122. In examples, there are multiple ranges for attenuation.

In examples, each of the at least one attenuator 110 is configured to attenuate the signal by different amounts and depending on the current intensity, one (or none) of the at least one attenuator 110 is selected to attenuate (or not attenuate at all) the backscattered light 122 before it is received by the at least one detector 112. In examples, the at least one attenuator 110 includes only a single attenuator 110-1 and depending on the current intensity, either the single attenuator 110-1 is selected (to provide attenuation) or no attenuator 110 is selected (for no attenuation). In examples, the at least one attenuator 110 includes two or more attenuators 110 and one attenuator 110 is selected (to provide a particular level of attenuation) depending on the current intensity or no attenuator 110 is selected (for no attenuation).

In examples, the at least one attenuator 110 includes at least one of an optical chopper, a photoelastic modulator and polarizer, a fiber attenuator, and a free space attenuator. In examples, a chopper (implementing at least one attenuator 110) is used to periodically interrupt a light beam, thereby modulating the intensity of the light beam. In examples, a chopper (implementing at least one attenuator 110) may be a variable frequency rotating disc chopper, a fixed frequency tuning fork chopper, or an optical shutter. In examples, attenuation of a chopper is changed based on the type of chopper wheel used and the speed of the chopper wheel or size of the voids in the chopper wheel. In examples, a photoelastic modulator adjusts the polarity of light and then the light is passed through a polarizer that only accepts light if it is aligned in polarity with the direction of the polarizer. In examples, the photoelastic modulator is used to change the polarization to adjust how much light will pass through the polarizer. In examples, the combination of the photoelastic modulator and polarizer is referred to as a photoelastic modulator chopper.

In examples, a fiber attenuator is used to reflect or change how well light couples from one optical fiber into another optical fiber. In examples, the fiber attenuator may offset the two optical fibers so that less of the light couples from one optical fiber into the other optical fiber. In examples, the fiber attenuator can be adjusted in real time to switch between different levels of attenuation. In examples, different fiber attenuators are used to provide different levels of attenuation. In examples, free space attenuators are large scale (with larger size optics) that are not sized for fiber optics (at the micrometers level) such that lenses may be used to interface from a fiber optic to the attenuator.

In examples, the LiDAR sensor 102A includes optional power source(s) 128 that provide power to various components of the LiDAR sensor 102A.

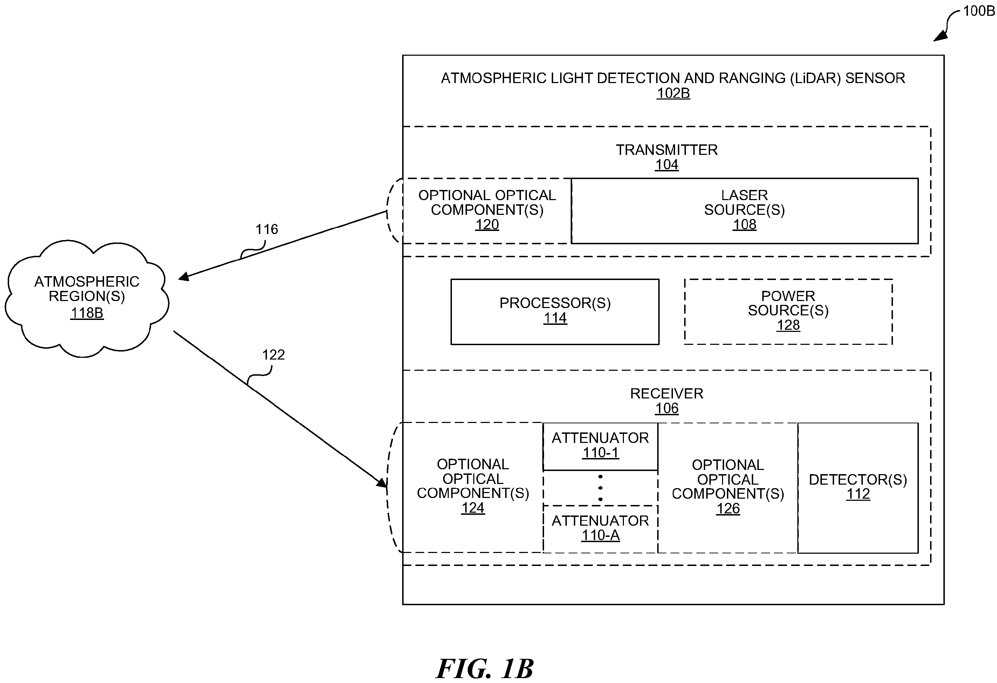

Figure 1B is a block diagram of a system 100B having an atmospheric Light Detection And Ranging (LiDAR) sensor 102B having components similar to those of LiDAR sensor 102A described with reference to Figure 1A and system 100A. The atmospheric LiDAR sensor 102B is a specific implementation of the LiDAR sensor 102A that is specifically used to measure atmospheric properties (such as temperature, density, winds, humidity, aerosol measurements, and turbulence) of an atmospheric region 118B (which is a specific implementation of the measurement location 118A). In examples, the atmospheric LiDAR sensor 102B measures atmospheric properties of the atmospheric region 118B by emitting at least one laser into the air where some amount of the light interacts with particles and molecules in the air and is backscattered toward the atmospheric LiDAR sensor 102B where it is collected and analyzed to determine atmospheric properties, such as temperature, density, winds, humidity, aerosol measurements, and turbulence. In examples, the atmospheric LiDAR sensor 102B is pointed to measure at a given location within the atmospheric region and the range of the atmospheric LiDAR sensor 102B is resolved so as to measure at a plurality of altitudes (such as all altitudes) of interest simultaneously. In examples, the atmospheric LiDAR sensor 102B is mounted to or integrated within an aircraft or other vehicle to measure altitude or other properties.

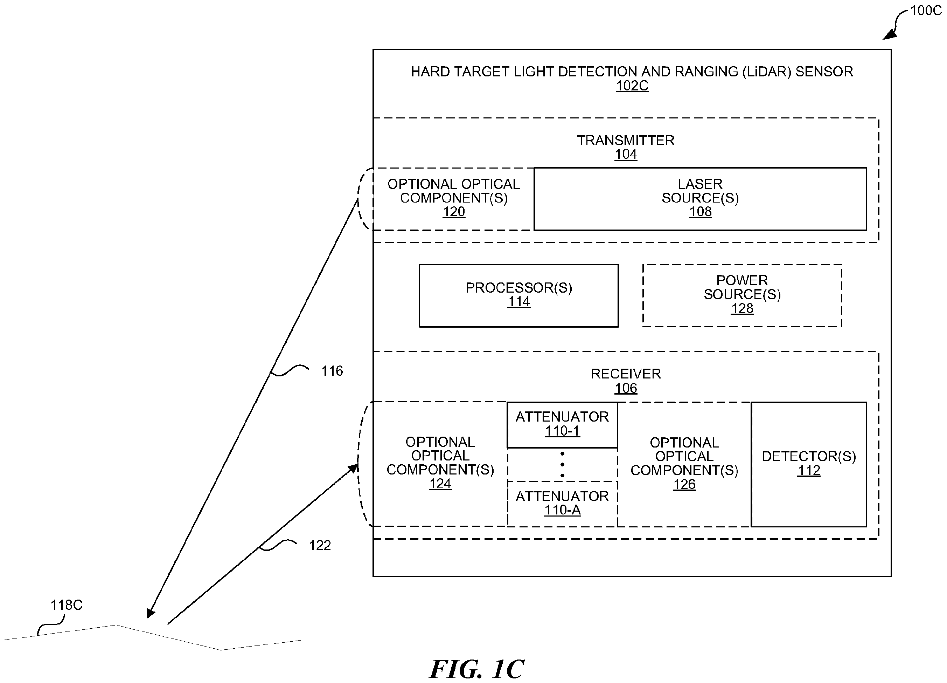

Figure 1C is a block diagram of a system 100C having a hard target Light Detection And Ranging (LiDAR) sensor 102C having components similar to those of LiDAR sensor 102A described with reference to Figure 1A and system 100A. The hard target LiDAR sensor 102C is a specific implementation of the LiDAR sensor 102A that is specifically used to measure a distance to a surface 118C (such as a ground surface or other objector surface). In examples, the hard target LiDAR sensor 102C is used to measure altitude of the hard target LiDAR sensor 102C from the surface 118C. In examples, the hard target LiDAR sensor 102C is mounted to or integrated within an aircraft or other vehicle to measure distance, altitude, or other properties.

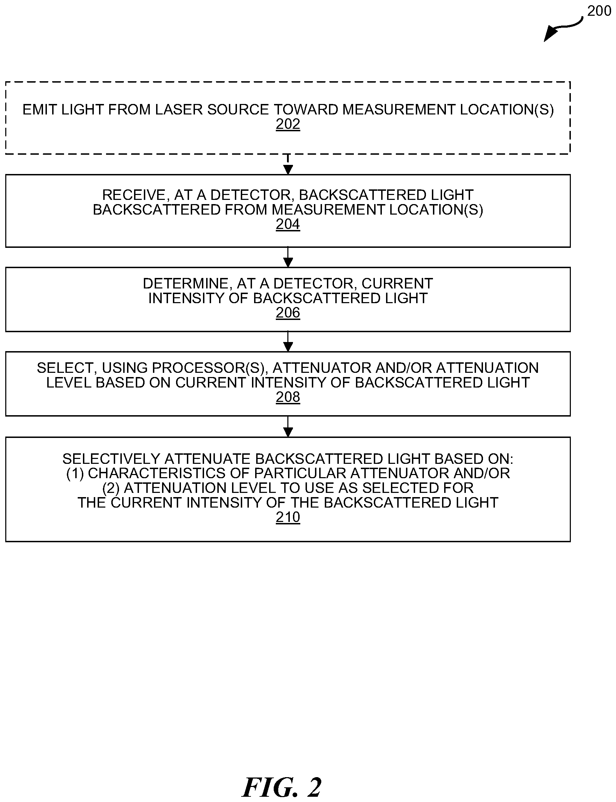

Figure 2 is an example method 200 for operating a Light Detection And Ranging (LiDAR) sensor (such as LiDAR sensor 102A, atmospheric LiDAR sensor 102B, or hard target LiDAR sensor 102C). In examples, method 200 begins at optional block 202 with emitting light from a laser source toward at least one measurement location (such as measurement location 118A). In examples, method 200 proceeds to block 204 with receiving, at a detector, backscattered light backscattered from the at least one measurement location. In examples, the measurement location includes at least one atmospheric region, wherein the backscattered light is backscattered from the at least one atmospheric region. In examples, the measurement location includes at least one surface, wherein the backscattered light is reflected from the at least one surface.

In examples, method 200 proceeds to block 206 with determining, at the detector, a current intensity of the backscattered light. In examples, the current intensity is related to at least one distance to the at least one measurement location. In examples, the at least one distance to the at least one measurement location includes a measurement of atmospheric properties (such as temperature, density, winds, humidity, aerosol measurements, and turbulence) of an atmospheric region or distance to an object or another surface or altitude from a ground surface. In examples, the particular attenuator includes at least one of a chopper, a photoelastic modulator and polarizer, a fiber attenuator, and a free space attenuator.

In examples, method 200 proceeds to block 208 with selecting, using at least one processor, at least one of an attenuator or an attenuation level based on the current intensity of the backscattered light. In examples, method 200 proceeds to optional block 210 with selectively attenuating the backscattered light based on at least one of: (1) characteristics of the particular attenuator or (2) the attenuation level to use as selected for the current intensity of the backscattered light.

In examples: (1) block 208 includes selecting, using the at least one processor, the particular attenuator selected for the current intensity of the backscattered light; and (2) block 210 includes selectively attenuating the backscattered light based on the characteristics of the particular attenuator selected for the current intensity of the backscattered light. In examples: (1) block 208 includes selecting, using the at least one processor, the attenuation level to use as selected for the current intensity of the backscattered light; and (2) selectively attenuating the backscattered light based on the attenuation level to use as selected for the current intensity of the backscattered light.

In examples, method 200 further includes: (1) bypassing attenuation of the backscattered light when the current intensity of the backscattered light is below a first threshold; and (2) attenuating the backscattered light by a first level when the current intensity of the backscattered light meets the first threshold. In examples, method 200 further includes: (1) attenuating the backscattered light by a first level when the current intensity of the backscattered light is below a first threshold; and (2) attenuating the backscattered light by a second level when the current intensity of the backscattered light meets the first threshold.

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forms of non-volatile memory and storage media, including by way of example random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs), magneto-optical disks, and/or the like. Any of the foregoing may be supplemented by, or incorporated in, any known processor, such as a general purpose processor (GPP) or special purpose (such as a field-programmable gate array (FPGA), application-specific integrated circuit (ASIC) or other integrated circuit or circuitry), or any programmable logic device.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

### Examples

Example 1 includes a light detection and ranging (LiDAR) sensor, the LiDAR sensor comprising: at least one detector configured to: receive backscattered light backscattered from at least one measurement location; and determine a current intensity of the backscattered light; at least one attenuator positioned between the at least one measurement location and the at least one detector; at least one processor configured to: select at least one of (1) a particular attenuator or (2) an attenuation level to use based on the current intensity of the backscattered light; and wherein the particular attenuator is configured to: selectively attenuate the backscattered light based on at least one of: (1) characteristics of the particular attenuator or (2) the attenuation level to use as selected by the at least one processor for the current intensity of the backscattered light.

Example 2 includes the LiDAR sensor of Example 1, further comprising: wherein the at least one processor is configured to select the particular attenuator for the current intensity of the backscattered light; and wherein the at least one attenuator is configured to selectively attenuate the backscattered light based on the characteristics of the particular attenuator as selected by the at least one processor for the current intensity of the backscattered light.

Example 3 includes the LiDAR sensor of any of Examples 1-2, further comprising: wherein the at least one processor is configured to select the attenuation level to use based on the current intensity of the backscattered light; and wherein the at least one attenuator is configured to selectively attenuate the backscattered light based on the attenuation level to use as selected by the at least one processor for the current intensity of the backscattered light.

Example 4 includes the LiDAR sensor of any of Examples 1-3, wherein the LiDAR sensor is configured to: bypass attenuation of the backscattered light when the current intensity of the backscattered light is below a first threshold; and attenuate the backscattered light by a first level when the current intensity of the backscattered light meets the first threshold.

Example 5 includes the LiDAR sensor of any of Examples 1-4, wherein the LiDAR sensor is configured to: attenuate the backscattered light by a first level when the current intensity of the backscattered light is below a first threshold; and attenuate the backscattered light by a second level when the current intensity of the backscattered light meets the first threshold.

Example 6 includes the LiDAR sensor of any of Examples 1-5, further comprising: at least one laser source configured to: emit light toward the at least one measurement location.

Example 7 includes the LiDAR sensor of any of Examples 1-6, wherein the at least one attenuator includes at least one of a chopper, a photoelastic modulator and polarizer, a fiber attenuator, and a free space attenuator.

Example 8 includes the LiDAR sensor of any of Examples 1-7, wherein the at least one measurement location includes at least one atmospheric region, wherein the backscattered light is backscattered from the at least one atmospheric region.

Example 9 includes the LiDAR sensor of any of Examples 1-8, wherein the at least one measurement location includes at least one surface, wherein the backscattered light is reflected from the at least one surface.

Example 10 includes a method of operating a light detection and ranging (LiDAR) sensor, the method comprising: receiving, at a detector, backscattered light backscattered from at least one measurement location; determining, at the detector, a current intensity of the backscattered light; selecting, using at least one processor, at least one of (1) a particular attenuator or (2) an attenuation level to use based on the current intensity of the backscattered light; and selectively attenuating the backscattered light based on at least one of: (1) characteristics of the particular attenuator or (2) the attenuation level to use as selected for the current intensity of the backscattered light.

Example 11 includes the method of Example 10, wherein: selecting, using the at least one processor, the particular attenuator selected for the current intensity of the backscattered light; and selectively attenuating the backscattered light based on the characteristics of the particular attenuator selected for the current intensity of the backscattered light.

Example 12 includes the method of any of Examples 10-11, wherein: selecting, using the at least one processor, the attenuation level to use as selected for the current intensity of the backscattered light; and selectively attenuating the backscattered light based on the attenuation level to use as selected for the current intensity of the backscattered light.

Example 13 includes the method of any of Examples 10-12, further comprising: bypassing attenuation of the backscattered light when the current intensity of the backscattered light is below a first threshold; and attenuating the backscattered light by a first level when the current intensity of the backscattered light meets the first threshold.

Example 14 includes the method of any of Examples 10-13, further comprising: attenuating the backscattered light by a first level when the current intensity of the backscattered light is below a first threshold; and attenuating the backscattered light by a second level when the current intensity of the backscattered light meets the first threshold.

Example 15 includes the method of any of Examples 10-14, further comprising: emitting light from a laser source toward the at least one measurement location.

Example 16 includes the method of any of Examples 10-15, wherein the at least one measurement location includes at least one atmospheric region, wherein the backscattered light is backscattered from the at least one atmospheric region.

Example 17 includes the method of any of Examples 10-16, wherein the at least one measurement location includes at least one surface, wherein the backscattered light is reflected from the at least one surface.

Example 18 includes a system comprising: a light detection and ranging (LiDAR) sensor configured to receive backscattered light having a current intensity from at least one atmospheric region; at least one attenuator configured to attenuate the current intensity of the backscattered light; and circuitry configured to: determine the current intensity of the backscattered light; and cause the at least one attenuator to attenuate the backscattered light based on the current intensity.

Example 19 includes the system of Example 18, wherein the circuitry is configured to: bypass attenuation of the backscattered light when the current intensity is below a first threshold; and cause the at least one attenuator to attenuate the backscattered light by a first level when the current intensity meets the first threshold.

Example 20 includes the system of any of Examples 18-19, wherein the circuitry is configured to: cause the at least one attenuator to attenuate the backscattered light by a first level when the current intensity is below a first threshold; and cause the at least one attenuator to attenuate the backscattered light by a second level when the current intensity meets the first threshold.

## Claims

1. A light detection and ranging (LiDAR) sensor, the LiDAR sensor comprising:
at least one detector configured to:
receive backscattered light backscattered from at least one measurement location; and
determine a current intensity of the backscattered light;
at least one attenuator positioned between the at least one measurement location and the at least one detector;
at least one processor configured to:
select at least one of (1) a particular attenuator or (2) an attenuation level to use based on the current intensity of the backscattered light; and wherein the particular attenuator is configured to:
selectively attenuate the backscattered light based on at least one of: (1) characteristics of the particular attenuator or (2) the attenuation level to use as selected by the at least one processor for the current intensity of the backscattered light.

2. The LiDAR sensor of claim 1, further comprising:
wherein the at least one processor is configured to select the particular attenuator for the current intensity of the backscattered light; and
wherein the at least one attenuator is configured to selectively attenuate the backscattered light based on the characteristics of the particular attenuator as selected by the at least one processor for the current intensity of the backscattered light.

3. The LiDAR sensor of claim 1, further comprising:
wherein the at least one processor is configured to select the attenuation level to use based on the current intensity of the backscattered light; and
wherein the at least one attenuator is configured to selectively attenuate the backscattered light based on the attenuation level to use as selected by the at least one processor for the current intensity of the backscattered light.

4. The LiDAR sensor of claim 1, wherein the LiDAR sensor is configured to:
bypass attenuation of the backscattered light when the current intensity of the backscattered light is below a first threshold; and
attenuate the backscattered light by a first level when the current intensity of the backscattered light meets the first threshold.

5. The LiDAR sensor of claim 1, wherein the LiDAR sensor is configured to:
attenuate the backscattered light by a first level when the current intensity of the backscattered light is below a first threshold; and
attenuate the backscattered light by a second level when the current intensity of the backscattered light meets the first threshold.

6. The LiDAR sensor of claim 1, further comprising:
at least one laser source configured to:
emit light toward the at least one measurement location.

7. The LiDAR sensor of claim 1, wherein the at least one attenuator includes at least one of a chopper, a photoelastic modulator and polarizer, a fiber attenuator, and a free space attenuator.

8. The LiDAR sensor of claim 1, wherein the at least one measurement location includes at least one atmospheric region, wherein the backscattered light is backscattered from the at least one atmospheric region.

9. The LiDAR sensor of claim 1, wherein the at least one measurement location includes at least one surface, wherein the backscattered light is reflected from the at least one surface.

10. A method of operating a light detection and ranging (LiDAR) sensor, the method comprising:
receiving, at a detector, backscattered light backscattered from at least one measurement location;
determining, at the detector, a current intensity of the backscattered light;
selecting, using at least one processor, at least one of (1) a particular attenuator or (2) an attenuation level to use based on the current intensity of the backscattered light; and
selectively attenuating the backscattered light based on at least one of: (1) characteristics of the particular attenuator or (2) the attenuation level to use as selected for the current intensity of the backscattered light.
